# EUROPEAN PATENT SPECIFICATION

(11) **EP 3 738 781 B1**
(45) Date of publication and mention of the grant of the patent: **30.11.2022**
(21) Application number: 19185862.0
(22) Date of filing: 11.07.2019
(51) Int. Cl.: B41J 29/393, B41J 11/46, G06K 15/02, H04N 1/407

(54) **METHOD FOR MEDIA CALIBRATION IN INKJET PRINTERS**
VERFAHREN ZUR MEDIENKALIBRATION IN TINTENSTRAHLDRUCKERN
PROCÉDÉ D'ÉTALONNAGE DE SUPPORTS DANS DES IMPRIMANTES À JET D'ENCRE

(30) Priority: 13.05.2019 EP 19174046
(43) Date of publication of application: 18.11.2020
(73) Proprietor: Canon Production Printing Holding B.V., 5914 HH Venlo (NL)
(72) Inventor: VAN BEKKEM, Johannes M., 5914 CA Venlo (NL); VAN DER HEYDEN, Randolph M.W., 5914 CA Venlo (NL)
(74) Representative: Canon Production Printing IP Department

(56) References cited:
- US-A1- 2005 024 410
- US-A1- 2013 222 461

## Description

### FIELD OF THE INVENTION

The present invention generally pertains to a method for media calibration in an inkjet printer.

### BACKGROUND ART

Media calibration is a well-known process in the art. Such methods commonly comprise printing and scanning one or more calibration markers onto a recording medium, which are used to calibrate the average value of a media step, which is subsequently used to ascertain whether each of the media steps has been correctly performed. This media calibration process is essential in order to achieve high printing quality, as it minimizes undesired light and dark stripes between consecutive swaths.

It is also known in the art that it is sometimes difficult for the inkjet printer to interpret the calibration markers which have been previously printed onto the recording medium. Said difficulty may be caused by the inkjet printer not being capable of correctly interpreting the calibration markers, especially when particular types of recording media are used, as transparent or meshed media.

When an inkjet printer is incapable of correctly interpreting calibration markers, its media step calibration likely fails, which renders the recording medium unusable by the inkjet printer.

It is therefore needed to provide a method for printing a calibration marker that improves the readability of the calibration markers typically printed on recording media.

Document US 2005/024410 A1 relates to Techniques for calibrating a scanner mounted on a scanning carriage of an image forming device. The scanner array can also be used for print media border location.

### SUMMARY OF THE INVENTION

In an aspect of the present invention, a method for media calibration in an inkjet printer according to claim 1 is provided. The printer inkjet printer comprises a printing surface on top of which a transparent and/or meshed recording medium is displaced, a strip of a first color on top of the printing surface, and a monochromatic light source in which most of its energy is centered around a particular wavelength, wherein the color of said particular wavelength of the light source substantially coincides with the first color. The method comprises the steps of:
illuminating the recording medium with the monochromatic light source;
selecting a second color for printing at least one calibration marker such that a contrast between the first and the second color causes at least an amount of direct and reflected light from the light source to be absorbed by the at least one calibration marker; and
printing at least one calibration marker of the second color on the recording medium.

It should be noted that the color of the strip of a first color on top of the printing surface must substantially coincide with the first color. Ideally, the light source is a monochromatic light source in that all of its energy is in the same wavelength. In practical implementations, the light sources used are not purely monochromatic but have most of their energy centered around a particular wavelength, for example around 50% of the energy in a 20nm range around a particular wavelength, preferably at least 70%. Therefore, the color of the strip of a first color on top of the printing surface must also be such that said strip of a first color reflects most light of the light source whose energy is mostly also centered on said first color.

A person skilled in the art would readily understand that any of the light sources of the present invention has ideally most of its energy centered around a single wavelength, commonly known as narrowband light source.

The method also comprises a step of selecting a second color for printing at least one calibration marker such that a contrast between the first and the second color causes at least an amount of direct and reflected light from the light source to be absorbed by the at least one calibration marker. In this way, the method of the present invention takes advantage of the configuration between the strip of a first color on top of the printing surface and the light source of a first color, which causes at least a significant part of the light of the light source of a first color to be reflected by the strip of a first color on top of the printing surface, and simultaneously to be at least partially absorbed by the calibration markers printed in a second color, thereby improving the readability of the calibration markers during a subsequent scanning process.

The method further comprises a step of printing at least one calibration marker of the second color on the recording medium.

In an embodiment, the inkjet printer further comprises a scanner for scanning calibration markers. This embodiment allows the method of the present invention to ascertain the positioning of the calibration markers printed onto the recording medium.

In another aspect, the inkjet printer further comprises a second light source, wherein the color of the wavelength of the light source with a higher energy substantially coincides with a third color. This embodiment allows the method of the present invention to improve the readability of calibration markers printed on different colors, depending upon the wavelength in which the majority of the light energy of the first and second light sources. Further, it allows using the second light source for different tasks, such as ascertaining the position of parts of the image printed on a particular color, or to determine the positioning of the edges of the media, thereby further improving media step advance determinations.

In another aspect, the method of the present invention further comprises illuminating the edges of the recording medium with the second light source. This embodiment allows the method of the present invention to improve the visibility of the edges of the recording medium for a scanning process.

In another aspect, the method of the present invention further comprises scanning the plurality of calibration markers with the image scanner.

In another aspect, the method of the present invention further comprises scanning the edges of the recording medium with the image scanner.

In another aspect, the scanner for scanning calibration markers is a RGB scanner. This embodiment allows the method of the present invention using a scanner with different sensitivities for the different colors in the spectrum.

In another aspect, exclusively one of the RGB channels of the scanner is used for scanning the plurality of calibration markers.

In another aspect, exclusively one of the RGB channels of the scanner is used for scanning the edges of the recording medium. A person skilled in the art would readily recognize that usually two different channels are used for scanning the plurality of calibration markers and scanning the plurality of calibration markers.

In another aspect, the recording medium is transparent or meshed.

In another aspect, the inkjet printer is a scanning inkjet printer.

In another aspect, the method of the present invention further comprises performing a media step at least partially based upon the scanned location of a plurality of calibration markers.

In another aspect, the method of the present invention further comprises performing a media step at least partially based upon the position of the edges of the recording medium.

### BRIEF DESCRIPTION OF THE DRAWINGS

The present invention will become more fully understood from the detailed description given herein below and the accompanying schematic drawings which are given by way of illustration only, and thus are not limitative of the present invention, and wherein:
- Fig. 1: shows a schematic perspective view of an assembly of a guiding structure and a print head carriage in a scanning-type printer, the print head carriage carrying a print head;
- Fig. 2a: shows an example of calibration markers used in the context of the present invention;
- Fig. 2b: shows an additional example of calibration markers used in the context of the present invention;
- Fig. 3a: shows an example of an inkjet printer of the prior art;
- Fig. 3b: shows an example of an inkjet printer of the prior art;
- Fig. 3c: shows an example of an inkjet printer of the prior art;
- Fig. 4: shows an example of calibration markers in the context of the present invention;
- Fig. 5: shows a flowchart of the method of the present invention.

### DETAILED DESCRIPTION OF THE DRAWINGS

The present invention will now be described with reference to the accompanying drawings, wherein the same reference numerals have been used to identify the same or similar elements throughout the several views.

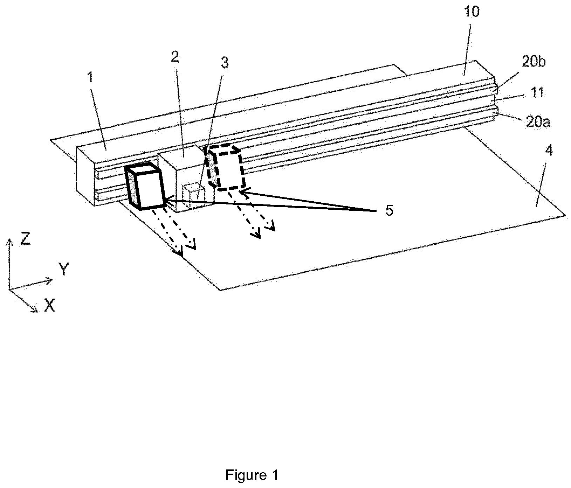

With reference to Fig. 1, a scanning-type inkjet printer comprises an inkjet print head 3 mounted on a print head carriage 2 arranged to move relative to a recording medium 4 along a first horizontal axis Y while being guided by a guiding structure 1. Scanning inkjet printers as that depicted in Fig. 1 are one of the types of printers on which the present invention may be applied.

Either the guiding structure 1 or the recording medium 4 is movably arranged in order for the guiding structure 1 and the recording medium 4 to be moved relative to each other along a second horizontal axis X normal to the first horizontal axis Y.

In operation, a swath of ink droplets is deposited onto the recording medium 4 by the print head 3 ejecting sequences of ink droplets towards the recording medium 4 while the print head carriage 2 is moving along the first horizontal axis Y, guided by the guiding structure 1.

In between the deposition of different swaths, the guiding structure 1 and the recording medium 4 are moved relative to each other along the second horizontal axis X, so that multiple swaths of ink droplets deposited onto the recording medium 4 can form a complete printed image.

In the shown embodiment, the guiding structure 1 comprises an elongated main part 10, oriented to extend along the first horizontal axis Y.

The guiding structure 1 further comprises a pair of primary guidance rails 20a, 20b, mounted above each other on a front face 11 of the main part 10 oriented orthogonally with respect to the second horizontal axis X. The primary guidance rails 20a, 20b extend in parallel to each other along the first horizontal axis Y spaced apart along the vertical axis Z.

Fig. 1 also shows two optional pinning lamps 5 attached to the carriage 2. When UV light-curable ink is used, said optional pinning lamps are suitable for applying ultraviolet, UV, light onto ink previously deposited onto recording medium 4. The pinning lamp situated at the left of the carriage 2 in Fig.1 takes care of applying UV light to the ink deposited by print head 3 while the print head carriage 2 displaces from right to left along the first horizontal axis Y, while the pinning lamp situated at the right of the carriage 2 in Fig.1 takes care of applying UV light to the ink deposited by print head 3 while the print head carriage 2 displaces from left to right along the first horizontal axis Y.

The present invention may be applied to scanning inkjet printers as the inkjet printer shown in Fig. 1. A person skilled in the art would readily appreciate that the present invention may be however applied in any inkjet printer. In case UV light-curable ink is used, the inkjet printer comprises at least one pinning lamp for applying ultraviolet, UV, light to a UV light-curable ink.

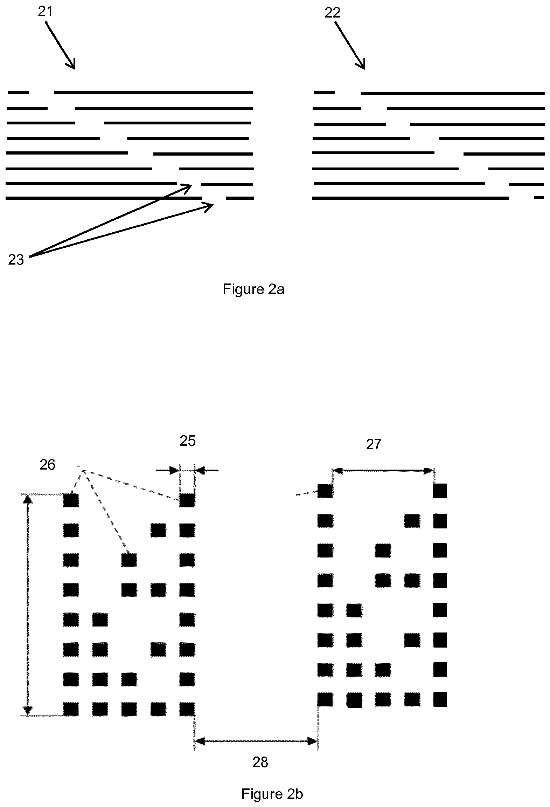

With reference to Fig. 2a, an example of calibration markers used in the context of the present invention is shown. Fig. 2a comprises a reference marker 21 and a test marker 22. It can be observed in Fig. 2a that the reference marker 21 and the test marker 22 are formed by a plurality of lines, wherein said lines include notches 23, understood as indentations, incisions, or discontinuities on an edge or line. Said notches are strategically placed such that the notches form a numbering system from which the different lines forming the reference marker 21 and a test marker 22 can be individually distinguished. The reference marker 21 and the test marker 22 are used to measure the calibration error. In order to do so, the reference marker 21 is printed with the first nozzles of a printhead, while the test marker 22 is printed with the last nozzles of said printhead once the media step has been performed. As the information about their position is known beforehand, the relative error attributable to the movement of the recording medium can be reliably inferred.

With reference to Fig. 2b, an additional example of calibration markers used in the context of the present invention is shown. Fig. 2b shows a bit-based pattern in which the lines of a calibration marker shown in Fig. 2a are substituted by lines referred to as bits in the art, which have the characteristic of being extremely short. Said bits are formed by very short lines as indicated in Fig. 2b by the width 25 of one of the bit markers 26 of Fig. 2b. Instead of notches, as in the example of Fig. 2a, the marker shown in Fig. 2b uses a binary code to indicate the line number of each bit. In Fig. 2b, element 27 is used as a binary code to indicate the line numbering. In the pattern of Fig. 2b, it can be observed that the line numbering is incremented one unit for every line, the first line having a decimal value 0 and the last line having a decimal value 7, knowing that the most significant bit of element 27 is that at the left of element 27. Fig. 2b also indicates the distance 28 between the reference marker (left) and the test marker (right). Similarly to Fig. 2a, as the information about their position is known beforehand, the relative error attributable to the movement of the recording medium can be reliably inferred.

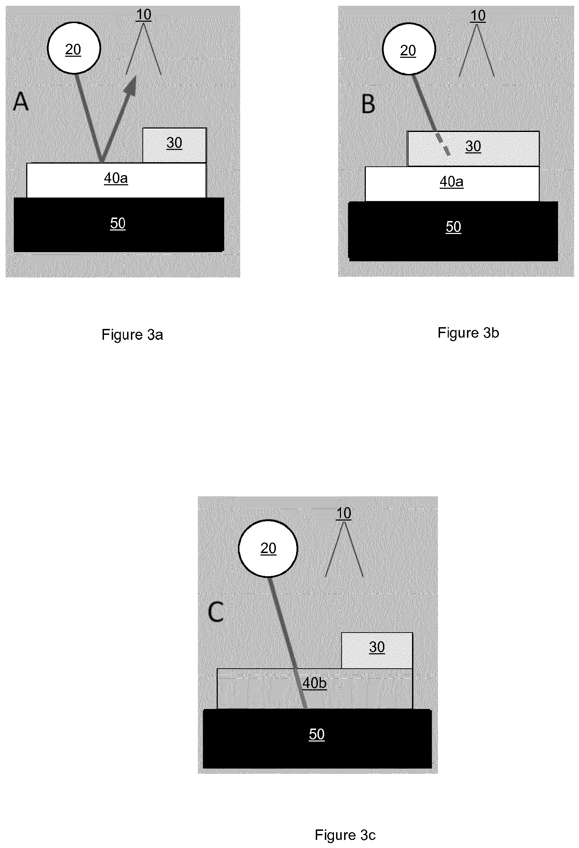

With reference to Figs. 3a and 3b, an example of calibration markers used in the prior art are shown. Figs. 3a and 3b comprise a scanner 10 and a light source 20. The scanner 10 works by emitting its own light onto selected parts of the recording medium, and subsequently imaging, for example with a CCD camera, those parts of the recording medium. Scanners typically used in the art comprise at least one light source 20, and oftentimes comprise at least a second light source. Alternatively, the scanner may comprise exclusively imaging means, such as a camera, while one or more light sources are independent of the scanner and part of the inkjet printer. The light source 20 is typically a light source, in which most of the energy is clustered around a single wavelength. For example a cyan (with a wavelength of between 490 and 520 nm) light source may be used, although a person of skill in the art would readily recognize that a light source of any different wavelength can be used. In case a cyan light source is used to illuminate an opaque media 40a (such as a regular white media), most of the light is absorbed by yellow or black ink 30 deposited on the opaque media (as shown in Fig. 3b). As a consequence, calibration markers printed with yellow or black (or any other color sufficiently far removed from the wavelength of the light source 20) absorb light such that enough contrast is created, thereby allowing the pattern of the calibration markers to be easily detected. In case the scanner 20 comprises at least a second light source, most of the energy is also clustered around a single wavelength. Typically, the second light source corresponds to a third color as most of its energy is also clustered around other single wavelength, wherein the other single wavelength is different to the wavelength of the light source 20. In a particular embodiment this second light source corresponds to the amber color with a wavelength of between 600 and 615 nm).

The benefits of printing reference marker 21 and test marker 22 using colors with an intense color contrast with the recording medium are known in the art. Further, it is also known using light of different predominant wavelengths in order to facilitate the scanning of the calibration markers. These techniques do not allow, however, accurately detecting calibration markers printed on transparent or meshed media, as it is better understood in relation with the explanations below.

With reference to Fig. 3c, an example of calibration markers used in the context of the present invention is presented. As in the example in Figs. 3a and 3b, the printer in Fig. 3c comprises a scanner 10 and a light source 20. The printer of Fig. 3c shows the operation when a transparent recording medium is being used. In this case, it can be observed in Fig. 3c that the light of the light source travels through he transparent media 40b, and is absorbed by the print surface onto which the recording medium is placed. As a consequence of this light absorption by the print surface of the printer, it is not possible for the scanner to recognize the pattern of the calibration markers.

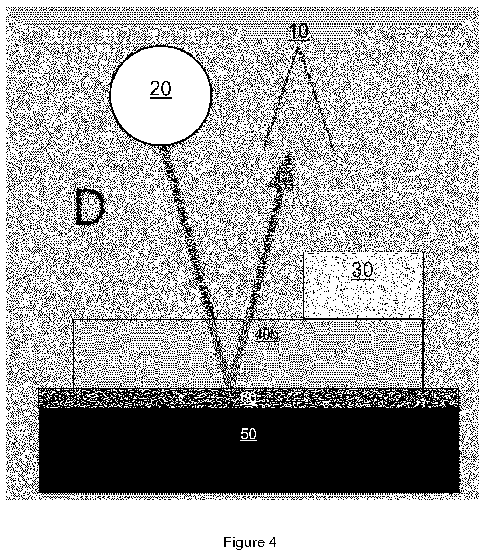

With reference to Fig. 4, an example of calibration markers used in the context of the present invention is presented. As in the example in Figs. 3a, 3b and 3c, the printer in Fig. 4 comprises a scanner 10 and a light source 20. In a particular embodiment, the scanner comprises a second light source of a different predominant wavelength than light source 20. The printer of Fig. 4 also shows the operation when a transparent recording medium is being used. In this printer, an additional colored strip has been added on top of the print surface onto which the recording medium is placed in comparison with the prior art configurations of Figs. 3a, 3b, and 3c. As a consequence of this light absorption by the print surface of the printer, it is not possible for the scanner to recognize the pattern of the calibration markers. For example, a cyan (with a wavelength of between 490 and 520 nm) light source may be used, such that a vast majority of the energy of the light source is centered on said wavelength. If the color of the colored strip substantially coincides, or is close in terms of wavelength, with the color on which the majority of the energy of the light source is centered, once the light of the light source has crossed the transparent media 40b, a significant part of the light is reflected by the colored strip on top of the print surface and bounces back. As a consequence, if calibration markers are printed onto the transparent media in a color that absorbs a significant amount of the light energy (as for example yellow when a cyan light source is used), the method of the present invention is capable of correctly recognizing the test pattern of those calibration markers even when they have been printed on transparent media 40b. A person of skill in the art would readily recognize that the color of the colored strip substantially coincides, or is close in terms of wavelength, with the color on which the majority of the energy of the light source is centered implies that both are close in terms of wavelength. A maximum difference may be stablished in 25% of the wavelength of the first light source, preferably 10%. Further, a person of skill in the art would readily recognize that many combinations are possible for the color in which the calibration markers are printed, and the color of the additional colored strip. However, the calibration markers must be printed onto the transparent media in a color that absorbs a significant amount of the light energy (as for example yellow when a cyan light source is used), at least 10% of the light energy, preferably at least 25%.

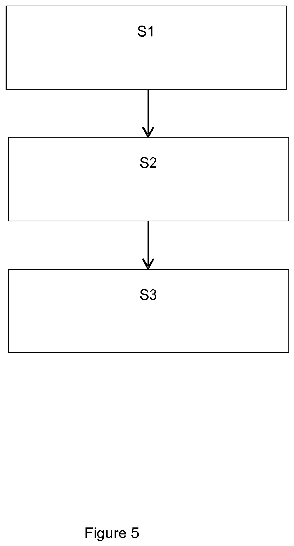

With reference to Fig. 5, a flow diagram of the method of the present invention is presented.

In the present invention, step S1 of the method of the present invention comprises illuminating the recording medium with a light source present in the inkjet printer, wherein the color of the wavelength of the light source with a higher energy substantially coincides with a first color. As explained above in relation to Fig. 4 said first color substantially coincides with the color of the strip that the inkjet printer of the present invention has on top of the printing surface. In this way, a significant part of the light emitted by the light source is reflected by the colored strip on top of the print surface and bounces back. As a consequence, if calibration markers are printed onto the transparent media in a color that absorbs a significant amount of the light energy (as for example yellow when a cyan light source is used), the method of the present invention is capable of correctly recognizing the test pattern of those calibration markers even when they have been printed on transparent media.

Subsequently, step S2 of the method of the present invention comprises selecting a second color for printing at least one calibration marker such that a contrast between the first and the second color causes at least an amount of direct and reflected light from the light source to be absorbed by the at least one calibration marker. As explained above, said second color is selected such that enough direct and reflected light is absorbed by calibration markers printed in this second color.

Next, in step S3 at least one calibration marker of the second color is printed on the recording medium.

In relation to additional steps of the method of the present invention as disclosed above, a person skilled in the art would readily recognize that the method of the present invention may comprise additional steps, such as steps related to scanning the printed calibration markers, steps related to the use of a second light source to determine the position of the edges of the recording medium, and/or steps related to the performance of the a media step advance based on the scanned calibration markers and/or based on the scanned edges of the recording medium.

In order to perform edge detection in the ink jet printer of the present invention, a second light source is used as explained above. The color of the wavelength of the second light source with a higher energy substantially coincides with a third color. Said third color must be chosen in such a way that light color is reflected by opaque media (or at least a significant amount of the energy thereof), and at the same time that light color (or at least a significant amount of the energy thereof) is absorbed by the strip of a first color on top of the printing surface. Therefore, a person of skill in the art would readily recognize that many color combinations between the first color and the third color would fulfil the conditions laid down for the first and third colors, namely that the first color of the print surface is such that it reflects most of the light of one scanner light color (the one used for detecting the calibration markers), while it absorbs most of the light of a third color (the one used to detect the edges of the media). For example, a typical combination is that of the first color corresponding to a wavelength of the color cyan, while the third color corresponds to amber. In this way, the media calibration can be further improved with the combined information of the position of the calibration markers and the edges of the recording medium.

Further, a person of skilled in the art would readily recognize that the present invention also relates to an inkjet printer comprising a printing surface on top of which a recording medium is displaced, a strip of a first color on top of the printing surface, a light source, wherein the color of the wavelength of the light source with a higher energy substantially coincides with the first color, and a controller for controlling the execution of the steps of any of the preceding claims. The controller for controlling the execution of the steps of any of the methods of the present invention may be any hardware and software combination permitting the execution of the different steps disclosed, such as any processor, FPGA, Digital Signal Processor or any other suitable hardware/software combination known in the art.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an" as used herein are defined as one, or more than one. The term plurality as used herein is defined as two, or more than two. The term another, as used herein, is defined as at least a second or more. The terms including and/or having, as used herein, are defined as comprising (i.e., open language).

## Claims

1. A method for media calibration in an inkjet printer, the inkjet printer comprising a printing surface on top of which a transparent and/or meshed recording medium is displaced, a strip (60) of a first color on top of the printing surface, and a monochromatic light source (20) in which most of its energy is centered around a particular wavelength, wherein the color of said particular wavelength of the light source substantially coincides with the first color, the method comprising:
illuminating the recording medium with the monochromatic light source (20);
selecting a second color for printing at least one calibration marker such that a contrast between the first and the second color causes at least an amount of direct and reflected light from the light source to be absorbed by the at least one calibration marker; and
printing at least one calibration marker of the second color on the recording medium.

2. The method of any of the preceding claims, the inkjet printer further comprising a scanner for scanning calibration markers.

3. The method according to claim 2, the inkjet printer further comprising a second monochromatic light source.

4. The method according to claim 3, further comprising illuminating the edges of the recording medium with the second monochromatic light source.

5. The method according to any preceding claim, further comprising scanning the plurality of calibration markers with the image scanner.

6. The method according to claims 4 or 5, further comprising scanning the edges of the recording medium with the image scanner.

7. The method according to any preceding claim, wherein the scanner for scanning calibration markers is a RGB scanner.

8. The method according to claim 7, wherein exclusively one of the RGB channels of the scanner is used for scanning the plurality of calibration markers.

9. The method according to claim 6, wherein exclusively one of the RGB channels of the scanner is used for scanning the edges of the recording medium.

10. The method according to any of the preceding claims, wherein the recording medium is transparent or meshed.

11. The method according to any of the preceding claims, wherein the inkjet printer is a scanning inkjet printer.

12. The method according to any of the preceding claims, further comprising performing a media step based upon the plurality of calibration markers with the image scanner.

13. The method according to any of the preceding claims, further comprising performing a media step also taking into account the position of the edges of the recording medium.

14. An inkjet printer, comprising:
a printing surface on top of which a recording medium is displaced;
a strip (60) of a first color on top of the printing surface;
a monochromatic light source (20) in which most of its energy is centered around a particular wavelength, , wherein the color of said particular wavelength of the light source substantially coincides with the first color; and
a controller for controlling the execution of the steps of any of the preceding claims.

## Patentansprüche

1. Ein Verfahren zur Medienkalibrierung in einem Tintenstrahldrucker, wobei der Tintenstrahldrucker eine Druckoberfläche, auf deren Oberseite ein transparentes und/oder netzartiges Aufzeichnungsmedium aufgelegt ist, einen Streifen (60) in einer ersten Farbe auf der Oberseite der Druckoberfläche, und eine monochromatische Lichtquelle (20) aufweist, bei der der größte Teil ihrer Energie um eine bestimmte Wellenlänge konzentriert ist, wobei die Farbe dieser bestimmten Wellenlänge der Lichtquelle im wesentlichen mit der ersten Farbe übereinstimmt, welches Verfahren die folgenden Schritte umfasst:
beleuchten des Aufzeichnungsmediums mit der monochromatischen Lichtquelle (20);
auswählen einer zweiten Farbe zum Drucken wenigstens einer Kalibriermarke derart, dass ein Kontrast zwischen der ersten Farbe und der zweiten Farbe bewirkt, dass zumindest eine Menge von direktem und reflektiertem Licht von der Lichtquelle durch die wenigstens eine Kalibriermarke absorbiert wird; und
drucken wenigstens einer Kalibriermarke in der zweiten Farbe auf das Aufzeichnungsmedium.

2. Das Verfahren nach einem der vorstehenden Ansprüche, bei dem der Tintenstrahldrucker weiterhin einen Scanner zum Scannen von Kalibriermarken aufweist.

3. Das Verfahren nach Anspruch 2, bei dem der Tintenstrahldrucker weiterhin eine zweite monochromatische Lichtquelle aufweist.

4. Das Verfahren nach Anspruch 3, mit dem weiteren Schritt des Beleuchtens der Kanten des Aufzeichnungsmediums mit der zweiten monochromatischen Lichtquelle.

5. Das Verfahren nach einem der vorstehenden Ansprüche, mit dem weiteren Schritt der Abtastung der mehreren Kalibriermarken mit dem Bildscanner.

6. Das Verfahren nach Ansprüchen 4 oder 5, mit dem weiteren Schritt der Abtastung der Kanten des Aufzeichnungsmediums mit dem Bildscanner.

7. Das Verfahren nach einem der vorstehenden Ansprüche, bei dem der Scanner zum Abtasten der Kalibriermarken ein RGB-Scanner ist.

8. Das Verfahren nach Anspruch 7, bei dem ausschließlich einer der RGB-Kanäle des Scanners dazu benutzt wird, die mehreren Kalibriermarken abzutasten.

9. Das Verfahren nach Anspruch 6, bei dem ausschließlich einer der RBG-Kanäle des Scanners dazu benutzt wird, die Kanten des Aufzeichnungsmediums abzutasten.

10. Das Verfahren nach einem der vorstehenden Ansprüche, bei dem das Aufzeichnungsmedium transparent oder netzartig ist.

11. Das Verfahren nach einem der vorstehenden Ansprüche, bei dem der Tintenstrahldrucker ein abtastender Tintenstrahldrucker ist.

12. Das Verfahren nach einem der vorstehenden Ansprüche, weiterhin umfassend die Ausführung eines Medienschrittes auf der Basis der mehreren Kalibriermarken mit dem Bildscanner.

13. Das Verfahren nach einem der vorstehenden Ansprüche, weiterhin umfassend die Ausführung eines Medienschrittes, bei dem auch die Position der Kanten des Aufzeichnungsmediums in Betracht gezogen wird.

14. Ein Tintenstrahldrucker, umfassend:
eine Druckoberfläche, auf deren Oberseite ein Aufzeichnungsmedium aufgelegt ist;
einen Streifen (60) in einer ersten Farbe auf der Oberseite der Druckoberfläche;
eine monochromatische Lichtquelle (20) bei der der größte Teil ihrer Energie um eine bestimmte Wellenlänge konzentriert ist, wobei die Farbe dieser bestimmten Wellenlänge der Lichtquelle im wesentlichen mit der ersten Farbe übereinstimmt; und
eine Steuereinrichtung zur Steuerung der Ausführung der Schritte eines der vorstehenden Ansprüche.

## Revendications

1. Procédé d'étalonnage de supports dans une imprimante à jet d'encre, l'imprimante à jet d'encre comprenant une surface d'impression sur laquelle un support d'enregistrement transparent et/ou maillé est déplacé, une bande (60) d'une première couleur sur la surface d'impression, et une source de lumière monochromatique (20) dans laquelle la majeure partie de son énergie est centrée autour d'une longueur d'onde particulière, dans lequel la couleur de ladite longueur d'onde particulière de la source de lumière coïncide sensiblement à la première couleur, le procédé comprenant :
l'éclairage du support d'enregistrement avec la source de lumière monochromatique (20) ;
la sélection d'une seconde couleur pour imprimer au moins un repère d'étalonnage de sorte qu'un contraste entre les première et seconde couleurs amène au moins une quantité de lumière directe et réfléchie provenant de la source de lumière à être absorbée par le au moins un repère d'étalonnage ; et
l'impression d'au moins un repère d'étalonnage de la seconde couleur sur le support d'enregistrement.

2. Procédé selon l'une quelconque des revendications précédentes, l'imprimante à jet d'encre comprenant en outre un scanner destiné à numériser des repères d'étalonnage.

3. Procédé selon la revendication 2, l'imprimante à jet d'encre comprenant en outre une seconde source de lumière monochromatique.

4. Procédé selon la revendication 3, comprenant en outre l'éclairage des bords du support d'enregistrement avec la seconde source de lumière monochromatique.

5. Procédé selon une quelconque revendication précédente, comprenant en outre la numérisation de la pluralité de repères d'étalonnage avec le scanner d'images.

6. Procédé selon les revendications 4 ou 5, comprenant en outre la numérisation des bords du support d'enregistrement avec le scanner d'images.

7. Procédé selon une quelconque revendication précédente, dans lequel le scanner destiné à numériser des repères d'étalonnage est un scanner RVB.

8. Procédé selon la revendication 7, dans lequel uniquement l'un des canaux RVB du scanner est utilisé pour numériser la pluralité de repères d'étalonnage.

9. Procédé selon la revendication 6, dans lequel uniquement l'un des canaux RVB du scanner est utilisé pour numériser les bords du support d'enregistrement.

10. Procédé selon l'une quelconque des revendications précédentes, dans lequel le support d'enregistrement est transparent ou maillé.

11. Procédé selon l'une quelconque des revendications précédentes, dans lequel l'imprimante à jet d'encre est une imprimante à jet d'encre de numérisation.

12. Procédé selon l'une quelconque des revendications précédentes, comprenant en outre la mise en oeuvre d'une étape supports sur la base de la pluralité de repères d'étalonnage avec le scanner d'images.

13. Procédé selon l'une quelconque des revendications précédentes, comprenant en outre la mise en œuvre d'une étape supports prenant également en compte la position des bords du support d'enregistrement.

14. Imprimante à jet d'encre, comprenant :
une surface d'impression sur laquelle un support d'enregistrement est déplacé ;
une bande (60) d'une première couleur sur la surface d'impression ;
une source de lumière monochromatique (20) dans laquelle la majeure partie de son énergie est centrée autour d'une longueur d'onde particulière, dans laquelle la couleur de ladite longueur d'onde particulière de la source de lumière coïncide sensiblement avec la première couleur ; et
un dispositif de commande destiné à commander l'exécution des étapes de l'une quelconque des revendications précédentes.
